# EUROPÄISCHE PATENTANMELDUNG

(11) **EP 2 182 259 A1**
(43) Veröffentlichungstag der Anmeldung: **05.05.2010**
(21) Anmeldenummer: 09002331.8
(22) Anmeldetag: 19.02.2009
(51) Int. Cl.: F16K 3/04, F16L 55/105

(54) **Verfahren zum Sperren einer Rohrleitung und Rohrsperrgerät**

(30) Priorität: 03.11.2008 DE 202008014576 U
(71) Anmelder: SWK SETEC GmbH, 47804 Krefeld (DE)
(72) Erfinder: Schmitz, Heinrich, 47802 Krefeld (DE)
(74) Vertreter: DR. STARK & PARTNER

(57) **Zusammenfassung**

Die Erfindung betrifft ein Verfahren zum Sperren einer unter Betriebsdruck befindlichen und insbesondere ein flüssiges oder gasförmiges Medien führenden Rohrleitung (24), die einen auf der Außenseite der Rohrleitung (24) angebrachten, insbesondere aufgeschweißten, Rohrstutzen (23) aufweist oder mit einem solchen versehen wurden, wobei innerhalb des Rohrstutzens ein Loch (17) in die Wandung der Rohrleitung (24) gebohrt ist und ein Rohrsperrgerät durch das Loch (17) in das Rohrinnere abgesenkt wird und die Rohrleitung (24) durch das Rohrsperrgerät gesperrt wird.

Um eine starke Schwächung der Rohrleitung (24) zu vermeiden sollen mittels einer Betätigungseinrichtung zumindest zwei verschwenkbar angeschlagene Sperrbacken (3,4,5,6), die jeweils eine dem Innendurchmesser der Rohrleitung (24) angepasste kreisringsegmentförmige Außenkontur aufweisen, mit dieser Außenkontur derart an die Innenfläche der Wandung der Rohrleitung (24) herangeschwenkt werden, dass sich die Gesamtheit der an die Innenfläche der Wandung der Rohrleitung (24) heran geschwenkten Sperrbacken (3,4,5,6) und evtl. vorhandener weiterer plattenförmiger Sperrbestandteile zu einer Kreisfläche entsprechend dem Innendurchmesser der Rohrleitung (24) ergänzt und die Rohrleitung (24) verschließt.

## Beschreibung

Die Erfindung betrifft ein Verfahren zum Sperren einer unter Betriebsdruck befindlichen und insbesondere ein flüssiges oder gasförmiges Medien führenden Rohrleitung, die einen auf der Außenseite der Rohrleitung angebrachten, insbesondere aufgeschweißten, Rohrstutzen aufweist oder mit einem solchen versehen wurden, wobei innerhalb des Rohrstutzens ein Loch in die Wandung der Rohrleitung gebohrt ist und ein Rohrsperrgerät durch das Loch in das Rohrinnere abgesenkt wird und die Rohrleitung durch das Rohrsperrgerät gesperrt wird.

Aus der Praxis sind derartige Verfahren bekannt, bei denen das Rohrsperrgerät eine kreisrunde Platte aufweist, welche zunächst durch das Loch in das Innere der Rohrleitung abgesenkt und dort in den noch vollständigen Bereich der Rohrleitung hineingeschwenkt wird und somit die Rohrleitung an dieser Stelle verschließt.

Nachteilig hierbei ist, dass die Fläche der kreisrunden Platte dem Innendurchmesser der Rohrleitung entspricht und damit das Loch in der Rohrleitung entsprechend groß ausgebildet sein muss, wodurch ein erhöhter Aufwand und eine starke Schwächung der Rohrleitung an dieser Stelle resultiert.

Aufgabe der Erfindung ist es, die vorgenannten Nachteile zu vermeiden und ein optimiertes Verfahren zum Sperren einer Rohrleitung anzugeben.

Diese Aufgabe wird dadurch gelöst, dass mittels einer Betätigungseinrichtung zumindest zwei verschwenkbar angeschlagene Sperrbacken, die jeweils eine dem Innendurchmesser der Rohrleitung angepasste kreisringsegmentförmige Außenkontur aufweisen, mit dieser Außenkontur derart an die Innenfläche der Wandung der Rohrleitung herangeschwenkt werden, dass sich die Gesamtheit der an die Innenfläche der Wandung der Rohrleitung heran geschwenkten Sperrbacken und evtl. vorhandener weiterer plattenförmiger Sperrbestandteile zu einer Kreisfläche entsprechend dem Innendurchmesser der Rohrleitung ergänzt und die Rohrleitung verschließt. Hierdurch kann vorzugsweise das Loch kleiner als der Durchmesser der Rohrleitung dimensioniert werden. Ein weiterer Vorteil der Erfindung ist, dass eine Anbohrung der Rohrleitung bis zum maximalen (Innen-)Durchmesser des Rohrstutzens (gemessen am Rohrscheitel der zu sperrenden Rohrleitung) erfolgen kann.

Vorzugsweise kann die Gesamtheit der an die Innenfläche der Wandung der Rohrleitung herangeschwenkten Sperrbacken und evtl. vorhandener weiterer plattenförmiger Sperrbestandteile in einer Hülle aus einem Elastomer angeordnet sein, die nach erfolgtem Heranschwenken der Sperrbacken an die Innenfläche der Wandung der Rohrleitung mit einem Medium gefüllt, insbesondere unter Druck aufgepumpt, wird. Auch kann das Loch derart kleiner als der Innendurchmesser des Rohrstutzens ausgebildet sein, dass ein umlaufender, nach innen weisender Kragen verbleibt und das Rohrsperrgerät mit einem Deckelelement, welches allseitig größer als das Loch und kleiner als der Innendurchmesser des Rohrstutzens ausgebildet ist, versehen ist, wobei dieser Deckel - vorzugsweise entweder zeitgleich mit oder aber nach erfolgtem Heranschwenken der Sperrbacken an die Innenfläche der Wandung der Rohrleitung - auf den Kragen abgesenkt wird. Dabei kann das Deckelelement auch mit einer Druckmesseinrichtung oder einer Druckmessleitung bzw. einem Druckmessanschluss, insbesondere in Form eines sich durch das Deckelelement hindurcherstreckenden Röhrchens, versehen sein.

Die Erfindung betrifft weiterhin ein Rohrsperrgerät zum Sperren einer unter Betriebsdruck befindlichen und insbesondere ein flüssiges oder gasförmiges Medien führenden Rohrleitung, die einen auf der Außenseite der Rohrleitung angebrachten, insbesondere aufgeschweißten, Rohrstutzen aufweist oder mit einem solchen versehen wurden, wobei innerhalb des Rohrstutzens ein Loch in die Wandung der Rohrleitung gebohrt ist, durch welches das Rohrsperrgerät Loch in das Rohrinnere zur Sperrung der Rohrleitung absenkbar ist, insbesondere zur Durchführung des erfindungsgemäßen Verfahrens.

Die Lösung der eingangs beschriebenen Problematik erfolgt, indem das Rohrsperrgerät einerseits zwei verschwenkbar angeschlagene Sperrbacken aufweist, die jeweils eine dem Innendurchmesser der Rohrleitung angepasste kreisringsegmentförmige Außenkontur aufweisen, und andererseits mit einer Betätigungseinrichtung versehen ist, mittels der die Sperrbacken mit ihrer jeweiligen Außenkontur derart an die Innenfläche der Wandung der Rohrleitung heranschwenkbar sind, dass sich die Gesamtheit der an die Innenfläche der Wandung der Rohrleitung heran geschwenkten Sperrbacken und evtl. vorhandener weiterer plattenförmiger Sperrbestandteile zu einer Kreisfläche entsprechend dem Innendurchmesser der Rohrleitung ergänzt und die Rohrleitung verschließt. Das Loch kann somit kleiner dimensioniert werden als Durchmesser der Rohrleitung.

Die Gesamtheit der an die Innenfläche der Wandung der Rohrleitung herangeschwenkten Sperrbacken und evtl. vorhandener weiterer plattenförmiger Sperrbestandteile kann in einer Hülle aus einem Elastomer angeordnet sein, die nach erfolgtem Heranschwenken der Sperrbacken an die Innenfläche der Wandung der Rohrleitung mit einem Medium füllbar, insbesondere unter Druck aufpumpbar, ist.

Das Loch kann derart kleiner als der Innendurchmesser des Rohrstutzens ausgebildet sein, dass ein umlaufender, nach innen weisender Kragen verbleibt, und dass das Rohrsperrgerät mit einem als Abdeckplatte ausgebildeten Deckelelement, welches allseitig größer als das Loch und kleiner als der Innendurchmesser des Rohrstutzens ausgebildet ist, versehen ist, wobei dieser Deckel - vorzugsweise entweder zeitgleich mit oder aber nach erfolgtem Heranschwenken der Sperrbacken an die Innenfläche der Wandung der Rohrleitung - auf den Kragen absenkbar ist. Vorzugsweise ist die Abdeckplatte genau fixiert und der zu sperrenden Rohrleitung sowie dem Loch angepasst.

Die Sperrvorrichtung kann spiegelsymmetrisch aufgebaut sein und die Symmetrieachse parallel zur Absenkrichtung vorgesehen sein.

Jeweils zwei übereinander angeordnete Sperrbacken können vorgesehen sein, die vorteilhafterweise, insbesondere über ein Zwischenelement, gelenkig miteinander bzw. jeweils gelenkig mit dem Zwischenelement verbunden sein können. Hierzu können die Sperrbacken Öffnungen haben und über ein Gelenk, das fest mit den Sperrbacken verbunden ist und als Drehpunkt wirkt, zusammengehalten werden.

Auch können jeweils zwei nebeneinander angeordnete Sperrbacken vorgesehen sein, die vorteilhafterweise, insbesondere über ein Zwischenelement, gelenkig miteinander bzw. jeweils gelenkig mit dem Zwischenelement verbunden sind. Hierzu können die Sperrbacken Öffnungen haben und über ein Gelenk, das fest mit den Sperrbacken verbunden ist und als Drehpunkt wirkt, zusammengehalten werden.

Die Sperrbacken können innenseitig relativ zur Absenkrichtung schräg gestellte Führungsflächen aufweisen und die Betätigungseinrichtung ein parallel zur Absenkrichtung verlagerbares Betätigungselement aufweisen, welches durch translatorische Verlagerung die Sperrbacken auswärts drückt bzw. die Sperrbacken für eine Einwärtsbewegung freigibt. Hierzu kann ein Druckbolzen über eine Bewegungsstange kraftbeaufschlagbar sein und eine Auf- bzw. Abwärtsbewegung zur Auswärts- bzw. Einwärtsverschwenkung der Sperrbacken erzielbar sein. Der Druckbolzen kann durch eine Abdichtung geführt sein und/oder am Ende ein Gewinde haben.

Zwei parallel in geringem Abstand voneinander angeordnete, im Wesentlichen rechteckige Gehäuseplatten können vorgesehen sein, zwischen denen sich die Sperrbacken in noch nicht an die Innenfläche der Wandung der Rohrleitung heran geschwenkten Zustand befinden, wobei die Gehäuseplatten durch insbesondere als Bolzen ausgebildete Verbindungsmittel miteinander verbunden sind. (Hierzu können die Sperrbacken durch Bolzen, die als Drehpunkt für die Sperrbacken dienen, an den zwei Gehäuseplatten befestigt sein. Der Druckbolzen kann ebenfalls zwischen den Gehäuseplatten befindlich sein. Die Gehäuseplatten können über Laschen fest miteinander verbunden sein. An den Laschen können Führungsstangen insbesondere fest angebracht sein, um somit ein maßgenaues Einführen in die abzusperrende Rohrleitung zu gewährleisten.)

Die Bolzen können als Lagerung (Drehpunkt) für die Schwenkbewegung der Sperrbacken vorgesehen sein.

Die Sperrbacken können Aufweitungen aufweisen, die bei in das Loch eingeführtem und an die Innenfläche der Wandung der Rohrleitung heran geschwenktem Zustand bis in das Loch hineinreichen und insbesondere so ausgebildet sind, dass sie sich bis zur projizierten Fortsetzung des Außendurchmessers der Rohrleitung fortsetzen.

Der Rohrstutzen kann dabei vorzugsweise an seinem freien, nicht an der Rohrleitung befindlichen, Ende eine lösbare Verbindung, insbesondere in Form eines Flansches, aufweisen. Auf der lösbaren Verbindung kann vorzugsweise eine Absperrung vorgesehen und insbesondere durch Schraubbolzen gesichert sein. Auf der Absperrung wiederum kann ein Rohrschacht aufgeflanscht und insbesondere durch Schraubbolzen gesichert sein, wobei der Rohrschacht eine Öffnung mit Absperreinrichtung sowie einen Deckel mit Stutzen aufweisen kann. Zwischen den Flanschen können sich Abdichtungen und/oder im Stutzen können sich Dichtungselemente befinden. Am Rohrschacht können Stützen angebracht sein, auf denen insbesondere Standrohre befestigt sein können, die vorzugsweise mit Gewinden, Schraubmuttern und Anschlagscheiben befestigt sein können.

Auf den Standrohren kann sich eine Schiebe- und Verdrehvorrichtung befinden, die insbesondere über die Öffnungen geführt werden kann bzw. über die Öffnungen führbar ist und/oder vorzugsweise an der Hebestange befestigt sein kann und/oder eine Öffnung haben kann. Die Hebestange kann eine Öffnung mit Absperrung haben, und zwischen der Hebestange und der Bewegungsstange kann sich mindestens eine Dichtung befinden, so das der Ringraum zwischen der Absperrung mit Stutzen und der Schiebe- und Verdreheinrichtung abgedichtet ist. Flüssige oder gasförmige Medien können über die Absperrung über den Ringraum zwischen der Hebestange und der Bewegungsstange eingelassen werden. Bei Entfernung der Dichtungen reicht der Druck dieses Mediums dann bis an die Sperrbacken und kann dann den Druck der Elastomere als Innendruck erhöhen, um den eigentlichen Dichtvorgang der zu sperrenden Rohrleitung zu verbessern.

An der Schiebe- und Verdreheinrichtung kann eine Brücke angebracht sein. Zwischen der Schiebe- und Verdreheinrichtung und der Brücke kann eine Gewindemutter zum Betätigen der Bewegungsstange, die wiederum den Druckbolzen betätigt, vorgesehen sein.

Auch kann sich auf der Schiebe- und Verdreheinrichtung kann sich eine Brücke befinden. Durch die Öffnung kann ein Bolzen geschoben sein, an dem eine Gewindestange angebracht ist, die mittels einer Dreheinrichtung, die insbesondere durch eine Platte mit Stiften gebildet sein kann, verdrehbar ist.

Dabei kann der Bolzen durch die Öffnung der Brücke geschoben sein und insbesondere durch zwei Platten gesichert sein, so dass sich die Gewindestange noch drehen kann, aber fest mit der Brücke verbunden bleibt.

Auf den Standrohren kann eine Platte mit zwei Öffnungen aufgesetzt sein, die auf Anschlagscheiben aufliegt und durch Gewindemuttern gesichert ist. Die Platte kann ein Innengewinde haben, durch welche die Gewindestange geführt ist.

Die Sperrbacken können mit einem Keil über die durch die Bewegungsstange eingeleitete Kraft auseinander gedrückt werden, wobei der Keil insbesondere eine Öffnung hat, in die ein Stift eingeschoben wird, der als Führung dient und vorzugsweise mit den Gehäuseplatten verbunden ist. Die Sperrbacken können mit einer Zugfeder verbunden sein, durch die insbesondere ein Einwärtsschwenken der Sperrbacken bewirkbar ist. Auf der Gehäuseplatte kann sich ein Nocken befinden.

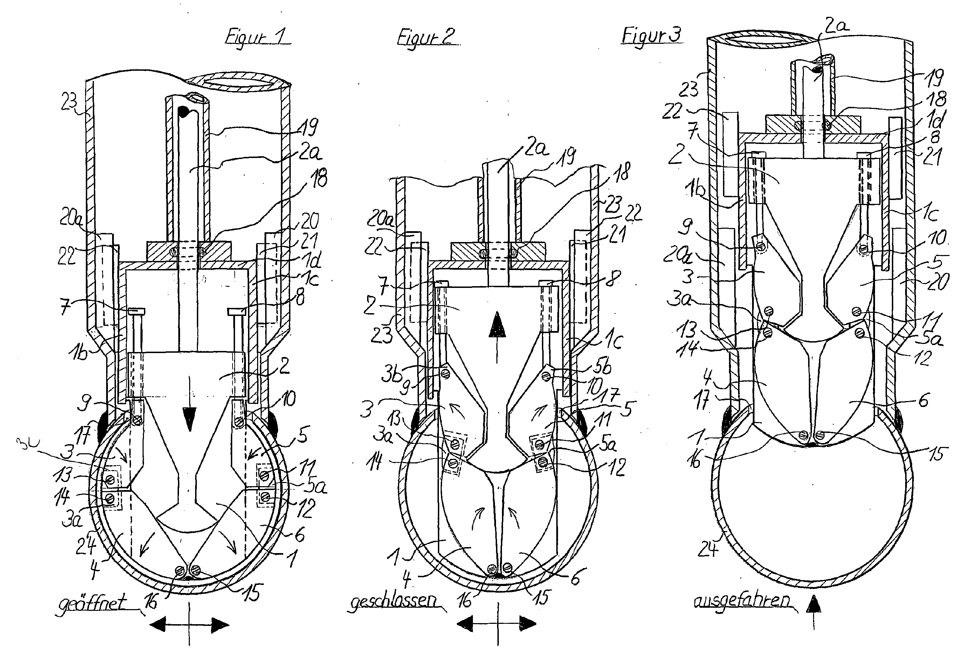

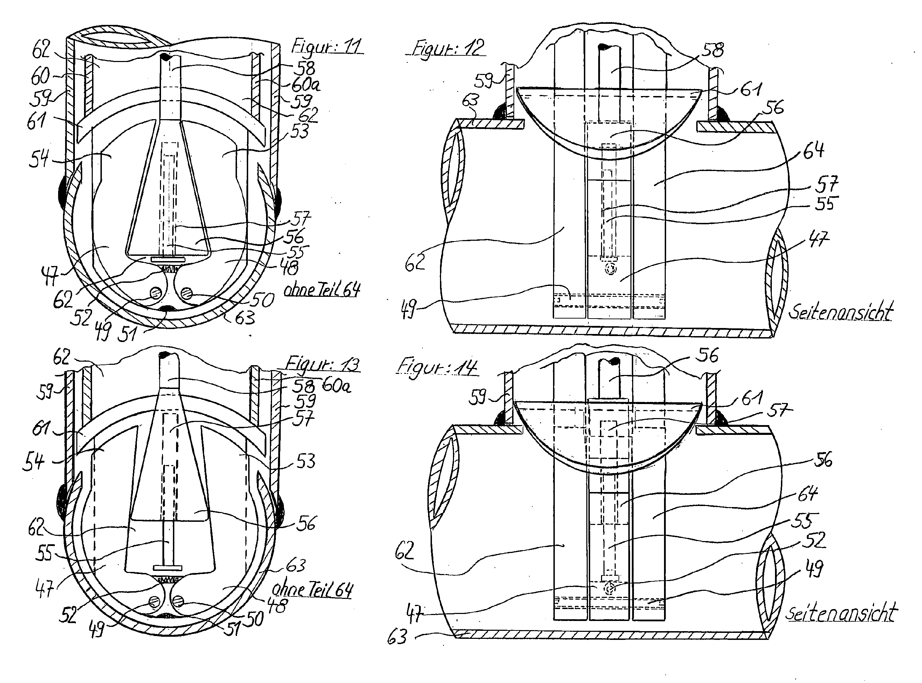

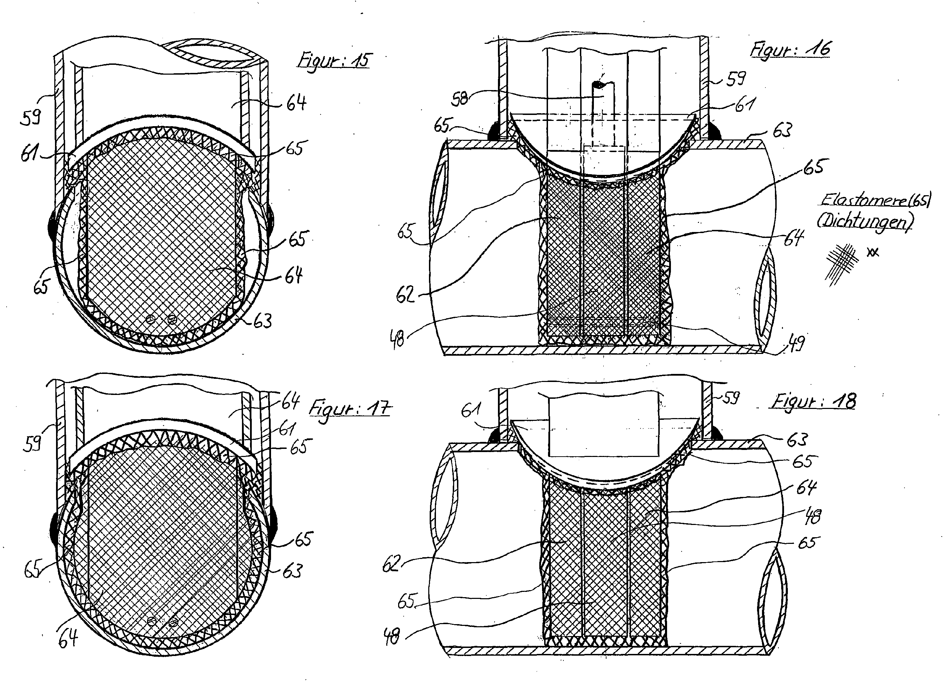

Im Folgenden werden in der Zeichnung dargestellte Ausführungsbeispiele der Erfindung erläutert. Die Figuren 1 bis 10 zeigen in verschiedenen Ansichten ein erstes Ausführungsbeispiel eines erfindungsgemäßen Sperrvorrichtung und die Figuren 11 bis 18 zeigen in verschiedenen Ansichten ein zweites Ausführungsbeispiel eines erfindungsgemäßen Sperrvorrichtung. In allen Figuren werden für gleiche bzw. gleichartige Bauteile übereinstimmende Bezugszeichen verwendet.

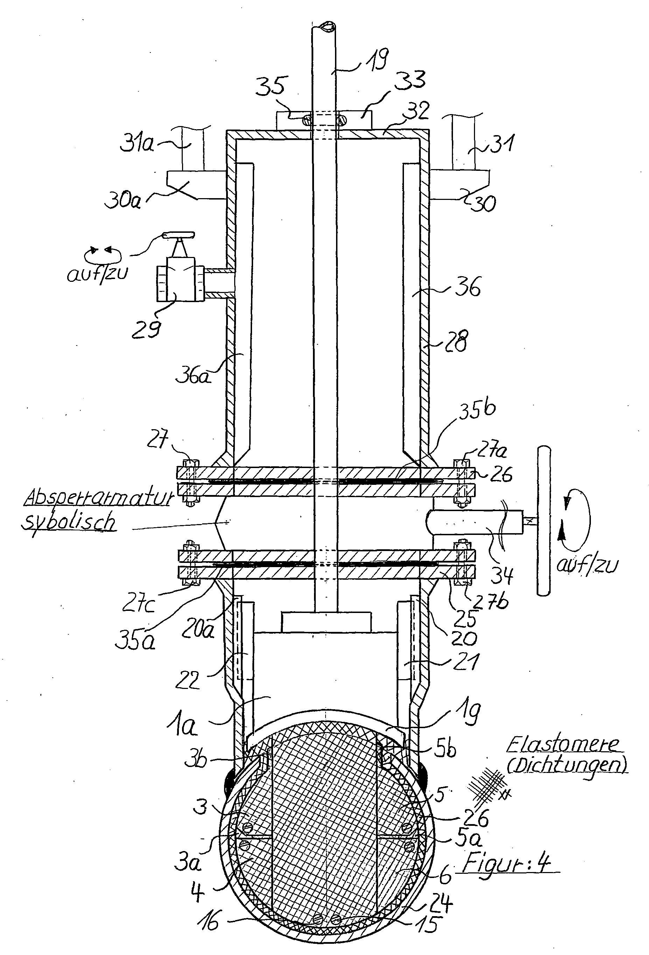

Die Erfindung betrifft Arbeiten an Rohrleitungen für flüssige und gasförmige Stoffe. Um eine Rohrleitung abzusperren, wird auf dem zu sperrenden Rohr ein Rohstutzen (Fig. 1 - 10) fest und dicht aufgebracht. Der Rohrstutzen dient als Hilfsmittel, um die bestehende Rohrleitung anbohren zu können um hiernach das Rohrsperrgerät gezielt in die zu sperrende Rohrleitung einzubringen (Fig. 4 - 10). Der Rohrstutzen verbleibt auf der zu sperrenden Rohrleitung.

Rohrstutzen sind allgemein bekannt. Sie können aber auch mit einer Rohrschelle oder mit z. B. Halbschalen- oder Mehrfachschalen, auf denen sich je ein Rohrstutzen befindet, auf die zu sperrende Rohrleitung fest und dicht aufgebracht werden. Auch dies sind allgemein bekannte Techniken.

Die Anbohrung kann mit Innendruck als auch im drucklosen Zustand an der zu sperrenden Rohrleitung durchgeführt werden. Diese Arbeiten sind Stand der Technik. Der fest und dicht auf der zu sperrenden Rohrleitung unter Innendruck aufgebrachte Rohrstutzen hat am offenen Rohrende eine Flanschverbindung, auf der dicht und fest eine Absperrung (Figur 4 wohl mit Rohrsperrgerät dargestellt) angeflanscht wird. Dabei ist die Absperrung geöffnet.

Auf der Absperrung wird ein Rohrschacht dicht und fest angeflanscht (Figur 4 wohl mit Rohrsperrgerät dargestellt). In diesem Fach befindet sich der Bohrer um die zu sperrende Rohrleitung anzubohren. Der Bohrer verbleibt im Rohrschacht, wobei die Bohrstange aus dem über einen Stutzen mit Dichtungselementen geführt wird. Ein handelsübliches Bohrgerät, das außerhalb, aber am oberen Ende des Rohrschachtes angebracht ist, gibt den Vorschub und betätigt den Anbohrvorgang über die Bohrstange.

Die ausgebohrte Scheibe bleibt dabei am Bohrkopf hängen und wird mitsamt dem Bohrkopf nach erfolgreicher Anbohrung zurück in den Rohrschacht gezogen.

Die Absperrung wird geschlossen. Der anstehende Druck im Rohrschacht wird über eine zusätzliche seitliche Absperrung abgelassen bis dieser Bereich drucklos ist. Im Rohrstutzen ist bis zur Absperrung der Innendruck des zu sperrenden Rohres. Der Rohrschacht mit dem Anbohrgerät kann entfernt werden. Dieser Anbohrvorgang ist Stand der Technik.

Der Rohrstutzen für das Rohrsperrgerät hat aber gegenüber herkömmlichen Rohrstutzen die Besonderheit, dass sich im rohrinneren Führungsschienen (Figur 1 - 4, 6, 8 - 10) befinden, auf denen das Rohrsperrgerät gezielt geführt werden kann.

Sollte nach Arbeitsende die zusätzliche Sperrarmatur entfernt werden, so kann dies nur geschehen, wenn die zu sperrende Rohrleitung anderweitig drucklos gemacht wird oder aber durch spezielle Verfahren, die es aber nicht für dieses Sperrgerät gibt, entfernt werden.

Dieses Verfahren mit den vier klappbaren Sperrbacken ermöglicht es, eine Durchmessergröße niedriger anzubohren als die zu sperrende Rohrleitung.

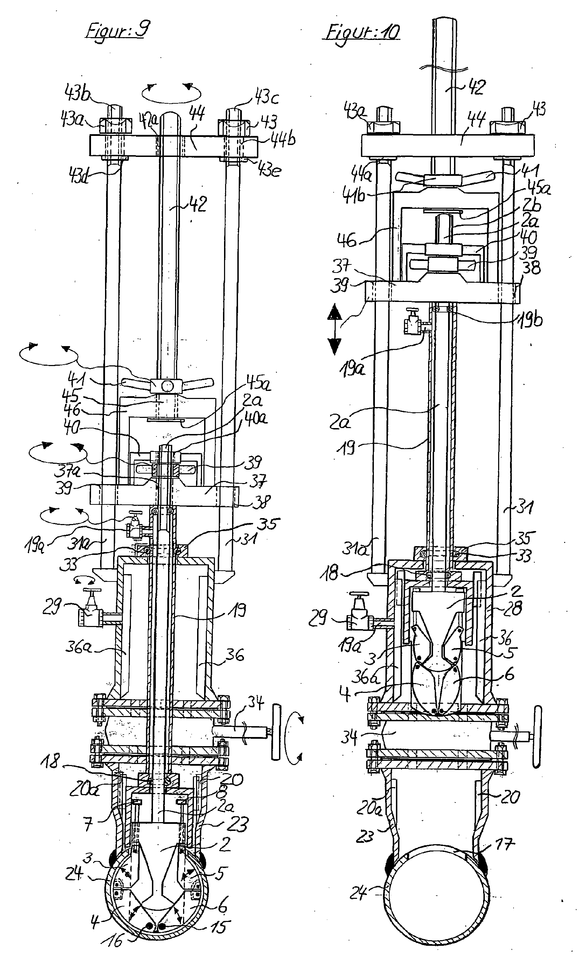

Der zuvor für das Anbohren benötigte Rohrschacht wird wiederum auf den Flansch der Absperrung dicht und fest aufgeschraubt. Dabei befindet sich im Rohrschacht das Rohrsperrgerät, wobei die Hebestange durch die Abdichtung der oben liegenden Lasche geführt wird. Die seitliche Absperrung für die Druckentspannung muss geschlossen sein. Durch öffnen der Absperrung, die sich auf dem Rohrstutzen befindet, strömt nun das Medium, welches in der zu sperrenden Rohrleitung transportiert wird, bis in den Rohrschacht. Es findet ein Druckausgleich zwischen dem Rohrschacht und der zu sperrenden Rohrleitung statt (Figur 10).

Durch kurzes Öffnen der seitlichen Absperrung wird der Rohrschacht entlüftet und unmittelbar hiernach wieder dicht verschlossen (Figur 10). Alle Verbindungen und Führungen sind dicht verschlossen, so dass kein Medium austreten kann.

Das gesamte Rohrsperrgerät ist mit einer zusammenhängenden Dichtung umschlossen, sodass nichts vom Medium, sei es gasförmig oder flüssig in das Sperrgerät eindringen kann (Figur 4).

Die Sperrbacken des Rohrsperrgerätes sind, solange es sich zwischen Rohrschacht und Rohrstutzen befindet, zusammengefaltet (Figur 3, 5, 6, 10).

In diesem zusammengefalteten Zustand wird das Rohrsperrgerät gezielt über die Führungsschienen in das Rohrinnere des zu sperrenden rohres eingeschoben (Figur 2).

Der Innendruck, der sehr unterschiedlich sein kann, wirkt unter Umständen heftig auf das Rohrsperrgerät ein. Im geschlossenen Zustand sind die Sperrbacken fest unterhalb der Gehäuseplatten und können nur von außerhalb des Rohrschachtes betätigt werden. Durch die Mitnehmerstangen im Sperrgerät, die am Druckbolzen und an den Sperrbacken befestigt sind, werden die Sperrbacken auf Spannung gehalten (Figur 3, 5, 6, 10). Das Elastomer liegt hierbei fest am Sperrgerät an.

Ist das Rohrsperrgerät am Boden des zu sperrenden Rohres angekommen, wird über die Druckstange eine Kraft auf den Druckbolzen ausgeübt und die Sperrbacken treiben auseinander (Figur 1, 7, 8, 9), verbleiben in der vorgegebenen Stellung, halten dabei das Elastomer auf Spannung und passt sich der zu sperrenden Rohrleitung an. Hierbei wird das außen liegende Elastomer (Dichtung) gegen die innere Rohrwand gepresst (Figur 4).

Das Elastomer (Dichtung) ist dicht gegenüber Gasen und flüssigen Stoffen und ist ähnlich einem Strumpf über das Sperrgerät übergestülpt.

Beim Einschieben des Rohrsperrgerätes in die zu sperrende Rohrleitung wurde die Abdeckplatte fest mit dem Elastomer (Dichtung) auf die äußere Rohrwand des zu sperrenden rohres gedrückt, so dass diese dicht abschließt (Figur 4). Die Ausweitungen an den Sperrbacken ermöglichen den Anpressdruck auf das Elastomer (Dichtung) so zu erhöhen, dass alle Öffnungen, aus denen noch Gase oder Flüssigkeiten in die abgesperrten Nebenräume eindringen könnten, verhindert wird (Figur 4). Hat die zu sperrende Leitung Ablagerungen oder ist unrund, kann der Anpressdruck des Elastomers (Dichtung) erhöht werden, indem man über die. Öffnung mit Absperrung (Figur 9 ) und der vorherigen Entfernung der Dichtung (Figur 1, Teil 18) den Durchfluss des Mediums ermöglicht und so den Elastomer wie ein Ballon aufdrückt. So entsteht eine Doppelfunktion, wobei über 90 % des abzusperrenden Rohres mit festen Platten, die in der Regel aus Stahl bestehen, abgedeckt ist.

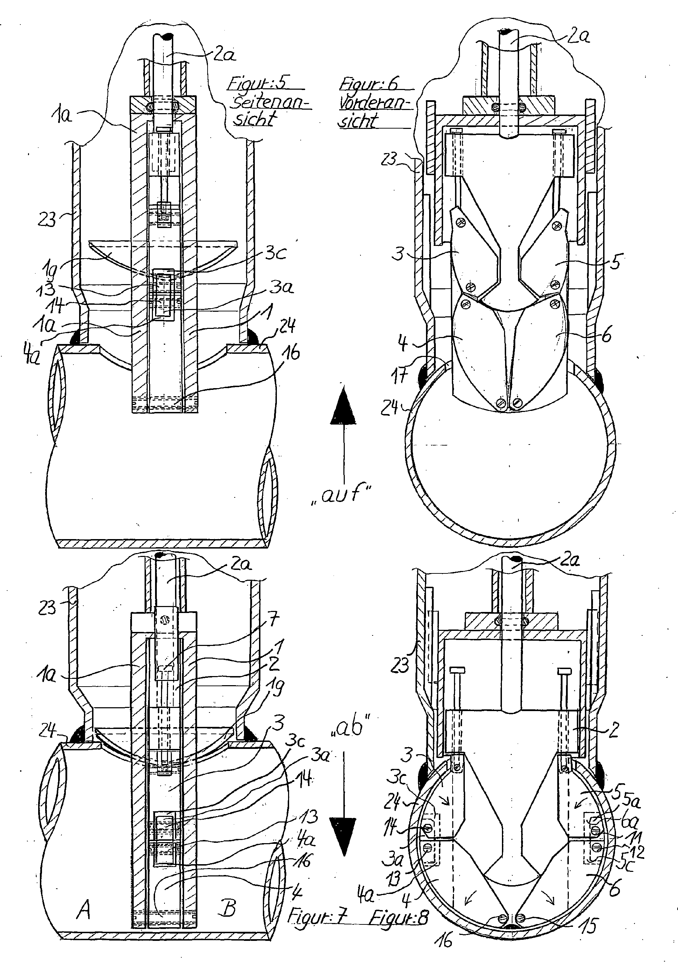

In der gesperrten Rohrleitung besteht jetzt bei einer geplanten Sperrung ein Druckausgleich (Figur 7, A und B).

Wird der Rohrinnendruck nur auf einer Seite, entweder A oder B (Figur 7) gesenkt, kommt es zu einer einseitigen Belastung des Rohrsperrgerätes. Das Rohrsperrgerät würde ohne einen geführten Sperrvorgang (Figur 1, 2, 3, 4, 7, 8, 9) so stark belastet werden, dass es nicht in der gewünschten Sperrstellung stehen würde.

Gibt es große Strömungsturbolenzen ist es ebenso wichtig, kontrolliert geführt in die zu sperrende Rohrleitung eingeführt zu werden.

Soll das Rohrabsperrgerät wieder entfernt werden, besteht in den Rohrleitungsabschnitten A und B (Figur 7) Druckdifferenzen, die vor dem Ziehen des Rohrsperrgerätes ausgeglichen werden sollten. Dabei wird zuerst das Medium, das den Elastomer wie ein Ballon geweitet hat, vorsichtig abgelassen und der Elastomer zieht sich wieder zusammen und die Absperrung wird wieder verschlossen. Hiernach wird das Sperrgerät langsam wieder über die Gewindemutter, die sich an der Schiebe- und Verdreheinrichtung befindet, geschlossen (Figur 2), sodass es wieder zu einem Druckausgleich in den Kammern A und B kommt (Figur 2, 7).

Durch betätigen der Gewindestange, wird das Rohrabsperrgerät über die Hebestange und der Schiebe- und Verdreheinrichtung an der Platte, die sich am oberen Ende der Standrohre befindet, hochgezogen (Figur 10) und verbleibt vollständig im Rohrschacht (Figur 10).

Die Absperrung auf dem Rohrstutzen wird gesperrt und der Rohrschacht über die Absperrung mit Stutzen vom Innendruck befreit. Das Rohrabsperrgerät und der Rohrschacht können entfernt werden. Durch einen Blindflansch kann die Absperrung auf dem Stutzen gesichert werden (ohne Abbildung).

Eine ähnliche Variante, welche nach dem gleichen Prinzip arbeitet, ist ein Rohrsperrgerät mit zwei Sperrbacken (Figur 11 - 18). Auch diese haben wiederum Drehpunkte, die fest mit den Gehäuseplatten verbunden sind. Die beiden Sperrbacken haben jeweils Ausweitungen (Figur 11, 13), die entscheidend den Anpressdruck auf das Elastomer (Dichtung) zu erhöhen (Figur 12). Die Backen werden durch einen Keil, der über die Bewegungsstange geführt wird, betätigt (Figur 11, 12). In diesem Keil befindet sich eine Bohrung, in der ein Führungsstab den Keil mittig über die Abdeckplatten führt (Figur 11 - 14). Der Führungsstab ist mit den Abdeckplatten verbunden (Figur 11, 12). Durch das Verschieben des Keils werden die Spannbacken auseinander bewegt. Eine Zugfeder zieht die Spannbacken wieder zusammen. Die Abdeckplatte ist konstruktiv genau wie bei der ersten Variante (Figur 4) gearbeitet, unterscheidet sich nur nach dem größeren Durchmesser des Rohrstutzens. Die Abdeckplatten müssen im Durchmesser größer sein, als der Anbohrdurchmesser. Der Nocken (Figur 11, 13, Teil 51) bewirkt, dass sich das Elastomer (Dichtung) nicht zwischen die Sperrbacken drückt und diese blockiert.

### STÜCKLISTE

| | | | |
|---|---|---|---|
| 1 Gehäuseplatte | 1a=Gehäuseplatte | 1b-1d=Laschen | |
| | | 1g=Abdeckplatte | |
| 2 Druckbolzen (Betätigungselement) | 2a=Bewegungsstange | | |
| 3 Sperrbacke | 3a=Gelenk | | 3c=Öffnung |
| 4 Sperrbacke | 4a=Öffnung | | |
| 5 Sperrbacke | 5a=Gelenk | | 5c=Örfnung |
| 6 Sperrbacke | 6a=Öffnung | | |
| 7 Mitnehmerstange | | | |
| 8 Mitnehmerstange | | | |
| 9 Bolzen | | | |
| 10 Bolzen | | | |
| 11 Bolzen | | | |
| 12 Bolzen | | | |
| 13 Bolzen | | | |
| 14 Bolzen | | | |
| 15 Bolzen | | | |
| 16 Bolzen | | | |
| 17 Anbohrung (Loch) | | | |
| 18 Abdichtung | | | |
| 19 Hebestange | 19a=Absperrung | 19b=Dichtung | |
| 20 Führungsschiene | 20a=Führungsschiene | | |
| 21 Führungsstange/Führung | | | |
| 22 Führungsstange/Führung | | | |
| 23 Rohrstutzen | | | |
| 24 Rohrleitung | | | |
| 25 Flansch (lösb. Verb.) | | | |
| 26 Elastomere | | | |
| 27 Schraubbolzen | 27a=Schraubbolzen | | |
| 28 Rohrschacht | | | |
| 29 Absperrung | | | |
| 30 Stützen | 30a=Stützen | | |
| 31 Standrohr | 31a=Standrohr | | |
| 32 Deckel | | | |
| 33 Stutzen | | | |
| 34 Absperrung/Dichtung | | | |
| 35 Dichtung/Dichtungselement | | | |
| 36 Führungsschiene | 36a=Führungsschiene | | |
| 37 Schiebe- und Drehvorrichtung | 37a=Öffnung | | |
| 38 Öffnung | | | |
| 39 Öffnung | | | |
| 40 Brücke | 40a=Innengewinde | | |
| 41 Stifte | | 41b=Platte | |
| 42 Gewindestange | 42a=Innengewinde | | |
| 43 Schraubmutter | 43a=Schraubmutter | 43b, 43c=Gewinde | |
| | 43d, 43e=Anschlagscheiben | | |
| 44 Platte | | 44a, 44b=Öffnung | |
| 45 Bolzen | | 45a=Platte | |
| 46 Brücke | | 46a=Öffnung | |
| 47 Sperrbacke | | | |
| 48 Sperrbacke | | | |
| 49 Bolzen | | | |
| 50 Bolzen | | | |
| 51 Nocken | | | |
| 52 Zugfeder | | | |
| 53 Aufweitung | | | |
| 54 Aufweitung | | | |
| 55 Stifte | | | |
| 56 Keil | | | |
| 57 Öffnung | | | |
| 58 Bewegungsstange | | | |
| 59 Rohrstutzen | | | |
| 60 Laschen | | 60a=Laschen | |
| 61 Abdeckplatte (Deckelelement) | | | |
| 62 Gehäuseplatte | | | |
| 63 Rohrleitung | | | |
| 64 Gehäuseplatte | | | |

## Patentansprüche

1. Verfahren zum Sperren einer unter Betriebsdruck befindlichen und insbesondere ein flüssiges oder gasförmiges Medien führenden Rohrleitung (24, 63), die einen auf der Außenseite der Rohrleitung (24, 63) angebrachten, insbesondere aufgeschweißten, Rohrstutzen (23, 59) aufweist oder mit einem solchen versehen wurden, wobei innerhalb des Rohrstutzens (23, 59) ein Loch (17) in die Wandung der Rohrleitung (24, 63) gebohrt ist und ein Rohrsperrgerät durch das Loch (17) in das Rohrinnere abgesenkt wird und die Rohrleitung (24, 63) durch das Rohrsperrgerät gesperrt wird, **dadurch gekennzeichnet, dass** mittels einer Betätigungseinrichtung zumindest zwei verschwenkbar angeschlagene Sperrbacken (3, 4, 5, 6, 47, 48), die jeweils eine dem Innendurchmesser der Rohrleitung (24, 63) angepasste kreisringsegmentförmige Außenkontur aufweisen, mit dieser Außenkontur derart an die Innenfläche der Wandung der Rohrleitung (24, 63)herangeschwenkt werden, dass sich die Gesamtheit der an die Innenfläche der Wandung der Rohrleitung (24, 63) herangeschwenkten Sperrbacken und evtl. vorhandener weiterer plattenförmiger Sperrbestandteile zu einer Kreisfläche entsprechend dem Innendurchmesser der Rohrleitung (24, 63) ergänzt und die Rohrleitung (24, 63) verschließt.

2. Verfahren nach dem vorhergehenden Anspruch, **dadurch gekennzeichnet, dass** die Gesamtheit der an die Innenfläche der Wandung der Rohrleitung (24, 63) herangeschwenkten Sperrbacken (3, 4, 5, 6, 47, 48) und evtl. vorhandener weiterer plattenförmiger Sperrbestandteile in einer Hülle aus einem Elastomer (26) angeordnet ist, die nach erfolgtem Heranschwenken der Sperrbacken (3, 4, 5, 6, 47, 48) an die Innenfläche der Wandung der Rohrleitung (24, 63) mit einem Medium gefüllt, insbesondere unter Druck aufgepumpt, wird.

3. Verfahren nach einem der vorhergehenden Ansprüche, **dadurch gekennzeichnet, dass** das Loch (17) derart kleiner als der Innendurchmesser des Rohrstutzens (23, 59) ausgebildet ist, dass ein umlaufender, nach innen weisender Kragen verbleibt und das Rohrsperrgerät mit einem Deckelelement (61), welches allseitig größer als das Loch (17) und kleiner als der Innendurchmesser des Rohrstutzens (23, 59) ausgebildet ist, versehen ist, wobei dieses Deckelelement - vorzugsweise entweder zeitgleich mit oder aber nach erfolgtem Heranschwenken der Sperrbacken (3, 4, 5, 6, 47, 48) an die Innenfläche der Wandung der Rohrleitung (24, 63) - auf den Kragen abgesenkt wird.

4. Rohrsperrgerät zum Sperren einer unter Betriebsdruck befindlichen und insbesondere ein flüssiges oder gasförmiges Medien führenden Rohrleitung (24, 63), die einen auf der Außenseite der Rohrleitung (24, 63) angebrachten, insbesondere aufgeschweißten, Rohrstutzen (23, 59) aufweist oder mit einem solchen versehen wurden, wobei innerhalb des Rohrstutzens (23, 59) ein Loch (17) in die Wandung der Rohrleitung (24, 63) gebohrt ist, durch welches das Rohrsperrgerät in das Rohrinnere zur Sperrung der Rohrleitung (24, 63) absenkbar ist, insbesondere zur Durchführung des Verfahrens nach einem der vorhergehenden Ansprüche, **dadurch gekennzeichnet, dass** das Rohrsperrgerät einerseits zwei verschwenkbar angeschlagene Sperrbacken (3, 4, 5, 6, 47, 48) aufweist, die jeweils eine dem Innendurchmesser der Rohrleitung (24, 63) angepasste kreisringsegmentförmige Außenkontur aufweisen, und andererseits mit einer Betätigungseinrichtung versehen ist, mittels der die Sperrbacken (3, 4, 5, 6, 47, 48) mit ihrer jeweiligen Außenkontur derart an die Innenfläche der Wandung der Rohrleitung (24, 63) heranschwenkbar sind, dass sich die Gesamtheit der an die Innenfläche der Wandung der Rohrleitung (24, 63) herangeschwenkten Sperrbacken (3, 4, 5, 6, 47, 48) und evtl. vorhandener weiterer plattenförmiger Sperrbestandteile zu einer Kreisfläche entsprechend dem Innendurchmesser der Rohrleitung (24, 63) ergänzt und die Rohrleitung (24, 63) verschließt.

5. Rohrsperrgerät nach einem der vorhergehenden Ansprüche, **dadurch gekennzeichnet, dass** die Gesamtheit der an die Innenfläche der Wandung der Rohrleitung (24, 63) herangeschwenkten Sperrbacken und evtl. vorhandener weiterer plattenförmiger Sperrbestandteile in einer Hülle aus einem Elastomer (26) angeordnet ist, die nach erfolgtem Heranschwenken der Sperrbacken an die Innenfläche der Wandung der Rohrleitung (24, 63) mit einem Medium füllbar, insbesondere unter Druck aufpumpbar, ist.

6. Rohrsperrgerät nach einem der vorhergehenden Ansprüche, **dadurch gekennzeichnet, dass** das Loch (17) derart kleiner als der Innendurchmesser des Rohrstutzens (23, 59) ausgebildet ist, dass ein umlaufender, nach innen weisender Kragen verbleibt, und dass das Rohrsperrgerät mit einem als Abdeckplatte (61) ausgebildeten Deckelelement (61), welches allseitig größer als das Loch (17) und kleiner als der Innendurchmesser des Rohrstutzens (23, 59) ausgebildet ist, versehen ist, wobei dieses Deckelelement (61) - vorzugsweise entweder zeitgleich mit oder aber nach erfolgtem Heranschwenken der Sperrbacken an die Innenfläche der Wandung der Rohrleitung (24, 63) - auf den Kragen absenkbar ist.

7. Rohrsperrgerät nach einem der vorhergehenden Ansprüche, **dadurch gekennzeichnet, dass** die Sperrvorrichtung spiegelsymmetrisch aufgebaut ist und die Symmetrieachse parallel zur Absenkrichtung vorgesehen ist.

8. Rohrsperrgerät nach einem der vorhergehenden Ansprüche, **dadurch gekennzeichnet, dass** jeweils zwei übereinander angeordnete Sperrbacken vorgesehen sind.

9. Rohrsperrgerät nach einem der vorhergehenden Ansprüche, **dadurch gekennzeichnet, dass** die jeweils übereinander angeordneten Sperrbacken (3, 4, 5, 6, 47, 48), insbesondere über ein Zwischenelement (3a, 5a), gelenkig miteinander bzw. jeweils gelenkig mit dem Zwischenelement (3a, 5a) verbunden sind.

10. Rohrsperrgerät nach einem der vorhergehenden Ansprüche, **dadurch gekennzeichnet, dass** jeweils zwei nebeneinander angeordnete Sperrbacken (3, 4, 5, 6, 47, 48)vorgesehen sind.

11. Rohrsperrgerät nach einem der vorhergehenden Ansprüche, **dadurch gekennzeichnet, dass** die jeweils nebeneinander angeordneten Sperrbacken, insbesondere über ein Zwischenelement (3a, 5a), gelenkig miteinander bzw. jeweils gelenkig mit dem Zwischenelement (3a, 5a) verbunden sind.

12. Rohrsperrgerät nach einem der vorhergehenden Ansprüche, **dadurch gekennzeichnet, dass** die Sperrbacken (3, 4, 5, 6, 47, 48)innenseitig relativ zur Absenkrichtung schräg gestellte Führungsflächen aufweisen und die Betätigungseinrichtung ein parallel zur Absenkrichtung verlagerbares Betätigungselement (2) aufweist, welches durch translatorische Verlagerung die Sperrbacken auswärts drückt bzw. die Sperrbacken (3, 4, 5, 6, 47, 48) für eine Einwärtsbewegung freigibt.

13. Rohrsperrgerät nach einem der vorhergehenden Ansprüche, **dadurch gekennzeichnet, dass** zwei parallel in geringem Abstand voneinander angeordnete, im Wesentlichen rechteckige Gehäuseplatten vorgesehen sind, zwischen denen sich die Sperrbacken (3, 4, 5, 6, 47, 48) in noch nicht an die Innenfläche der Wandung der Rohrleitung (24, 63) heran geschwenkten Zustand befinden, wobei die Gehäuseplatten (62, 64) durch insbesondere als Bolzen ausgebildete Verbindungsmittel miteinander verbunden sind.

14. Rohrsperrgerät nach dem vorhergehenden Anspruch, **dadurch gekennzeichnet, dass** die Bolzen (9, 10, 11, 12, 13, 14, 114, 15, 16, 49, 50) als Lagerung (Drehpunkt) für die Schwenkbewegung der Sperrbacken (3, 4, 5, 6, 47, 48) vorgesehen sind.

15. Rohrsperrgerät nach einem der vorhergehenden Ansprüche, **dadurch gekennzeichnet, dass** die Sperrbacken (3, 4, 5, 6, 47, 48) Aufweitungen (53, 54) aufweisen, die bei in das Loch (17) eingeführtem und an die Innenfläche der Wandung der Rohrleitung (24, 63) heran geschwenktem Zustand bis in das Loch (17) hineinreichen und insbesondere so ausgebildet sind, dass sie sich bis zur projizierten Fortsetzung des Außendurchmessers der Rohrleitung (24, 63) fortsetzen.
